# EUROPÄISCHE PATENTSCHRIFT

(11) **EP 2 391 689 B1**
(45) Veröffentlichungstag und Bekanntmachung des Hinweises auf die Patenterteilung: **05.10.2016**
(21) Anmeldenummer: 10701341.9
(22) Anmeldetag: 14.01.2010
(51) Int. Cl.: C09J 123/08, C08L 45/02, C08L 57/02, C08L 93/00

(54) **HAFTKLEBEMASSE**
ADHESIVE MASS
SUBSTANCE ADHÉSIVE SENSIBLE À LA PRESSION

(30) Priorität: 29.01.2009 DE 102009006591
(43) Veröffentlichungstag der Anmeldung: 07.12.2011
(73) Patentinhaber: tesa SE, 22848 Norderstedt (DE)
(72) Erfinder: DALMIS, Gabriel, 21509 Glinde (DE); HUSEMANN, Marc, 22559 Hamburg (DE)
(86) Internationale Anmeldenummer: PCT/EP2010/050409
(87) Internationale Veröffentlichungsnummer: WO 2010/086233

(56) Entgegenhaltungen:
- EP-A1- 0 934 990
- EP-A2- 0 315 070
- US-B2- 6 703 463

## Beschreibung

Die Erfindung betrifft eine Haftklebemassenformulierung sowie deren Verwendung für Verklebungen im optisch transparenten Bereich, insbesondere zur Verklebung optischer Bauteile, vorzugsweise optischer Folien.

Haftklebemassen werden heute sehr vielfältig eingesetzt. So existieren im Industriebereich die verschiedensten Anwendungen. Besonders zahlreich werden Klebebänder basierend auf Haftklebemassen im Elektronikbereich oder im Konsumgüterelektronikbereich eingesetzt. Auf Grund der hohen Stückzahlen lassen sich hier Haftklebebänder sehr schnell und leicht verarbeiten. Im Gegensatz dazu wären andere Prozesse, wie z.B. Nieten oder Schweißen, zu aufwändig. Neben der normalen Verbindungsfunktion müssen diese Haftklebebänder ggf. noch weitere Funktionen übernehmen. So kann dies z.B. eine thermische Leitfähigkeit, eine elektrische Leitfähigkeit oder auch eine optische Funktion sein. In letzterem Fall werden z.B. Haftklebebänder eingesetzt, die lichtabsorbierende oder lichtreflektierende Funktionen erfüllen. Eine weitere optische Funktion ist beispielsweise die Bereitstellung einer geeigneten Lichttransmission. Hier werden Haftklebebänder und Haftklebemassen eingesetzt, die sehr transparent sind, keine Eigenfärbung aufweisen und eine hohe Lichtstabilität besitzen. Anwendungsgebiete derartiger Haftklebemassen sind z.B. die Verklebung von Touch Panels auf einem LCD oder OLED-Display oder die Verklebung von ITO-Filmen (indium tin oxide - Indiumzinnoxid) für kapazitive Touch Panels.

In vielen Fällen hat eine Haftklebemasse für optische Anwendungen neben der Verbindungsfunktion die Funktion, Luft auszuschließen, da Luft einen Brechungsindex von 1 aufweist und die optischen Folien oder Gläser einen in der Regel deutlich höheren Brechungsindex aufweisen. Der Unterschied des Brechungsindex führt beim Übergang von Luft zu einem optischen Bauteil zu einer Reflektion, durch die die Transmission reduziert wird. E i ne Möglichkeit dieses Problem zu reduzieren stellen Antireflektivbeschichtungen dar, die den Übergang des Lichtes in das optische Bauteil erleichtern und die Reflektion vermindern. Alternativ oder ergänzend kann auch eine optische Haftklebemasse eingesetzt werden, die einen ähnlichen Brechungsindex wie das optische Bauteil aufweist. Dadurch wird die Reflektion an dem optischen Bauteil deutlich reduziert und die Transmission erhöht.

Insgesamt sind z.B. eine Vielzahl von Acrylathaftklebemassen bekannt, die sehr unterschiedliche Brechungsindizes aufweisen und für optisch transparente Anwendungen eingesetzt werden können. In der US 6,703,463 B2 werden Acrylathaftklebemassen beschrieben, die einen Brechungsindex unterhalb von 1,40 aufweisen. Dies wird durch fluorierte Acrylatmonomere erreicht. Die JP 2002-363523 A offenbart Acrylathaftklebemassen mit einem Brechungsindex zwischen 1,40 und 1,46. Auch hier werden fluorierte Acrylatmonomere eingesetzt. Kommerziell erhältlich sind zudem Acrylathaftklebebänder, wie z.B. 3M 8141, die einen Brechungsindex im Bereich von 1,47 bis 1,48 aufweisen. Die US 2002/0098352 A1 wiederum beschreibt Acrylathaftklebemassen mit aromatischen Comonomeren. Diese Acrylathaftklebemassen weisen einen Brechungsindex von 1,49 bis 1,65 auf. Die EP 1 652 889 A1 beschreibt Haftklebemassenformulierungen für optische Anwendungen, die auf Polydiorganosiloxanen basieren. Silikonverbindungen weisen in der Regel einen geringen Brechungsindex auf.

Des Weiteren sind auch eine Vielzahl von Haftklebemassen und Haftklebebändern bekannt, die auf Ethylvinylacetat-Copolymeren basieren. Diese weisen aber nur eine relativ schlechte Transparenz oder nur geringe Klebkräfte auf, so dass diese nur bedingt für permanente Verklebungen eingesetzt werden können. Beispiele hierfür sind in der EP 0315070 A2 offenbart.
Die EP 934 990 A zeigt eine Haftklebstoffzusammensetzung, die ein Ethylenvinylacetatcopolymer mit 40 Gew.-% Vinylacetatanteil und einen Rosinester umfasst. Der Gehalt des Ethylenvinylacetats an der Gesamt-Haftklebemasse ist jedoch gering, da weitere Komponenten enthalten sind. Werte für die optischen Eigenschaften des Haftklebstoffs sind nicht offenbart.

Aufgabe der vorliegenden Erfindung ist es eine alternative Haftklebemasse anzugeben, die sich insbesondere zur Verklebung optischer Bauteile eignet, also eine hohe Transparenz aufweist. Zudem sollte die Haftklebemasse nach Möglichkeit auch eine hohe UV-Stabilität aufweisen und sich inert bei der Verklebung auf elektrisch leitfähigen Substraten verhalten.

Die vorliegende Erfindung löst die zuvor beschriebene Aufgabe durch die Bereitstellung einer Haftklebemasse gemäß Anspruch 1. Eine nebengeordnete Lösung stellt die Verwendung einer Haftklebemasse gemäß Anspruch 11 bereit. Bevorzugte Ausgestaltungen und Weiterbildungen sind Gegenstand der jeweiligen Unteransprüche. Überraschenderweise hat sich gezeigt, dass es möglich ist, auf Basis von Ethylenvinylacetat-Copolymer eine Haftklebemasse herzustellen, die die gewünschten Anforderungen erfüllt, insbesondere nämlich optisch transparent ist sowie eine hohe Klebkraft für permanente Verklebungen aufweist. Zur Herstellung einer derartigen Haftklebemasse sind Modifizierungen mit bestimmten Harzen erforderlich.

Demgemäß betrifft die Erfindung einen Haftklebstoff bestehend aus einem Gemisch mindestens enthaltend
- ein Ethylenvinylacetat-Copolymer mit einem Vinylacetatanteil von 30 - 70 Gewichtsprozent
- ein Harz auf Kolophonium-Pentaerithrit Basis mit einem Erweichungsbereich von 80 - 120°C,
wobei der Harzanteil zwischen 20 Gew.-% und 40 Gew.-% bezogen auf das EVA-Copolymer beträgt und die Lichttransmission der Haftklebemassenformulierung bei größer 86 % und der Haze bei kleiner 5 % nach ASTM D 1003 liegt.

Der Anteil des Ethylenvinylacetats an der Haftklebemasse, bezogen auf das Ethylenvinylacetat-Copolymer mit einem Vinylacetatanteil von 30 bis 70 Gew.-%, beträgt mindestens 30 Gew.-%.

Neben den beschriebenen Bestandteilen kann die Haftklebemasse zudem auch weitere Bestandteile enthalten, beispielsweise weitere Polymere, weitere Harze oder auch Additive.

Eine derartige Haftklebemasse eignet sich aufgrund ihrer optischen Eigenschaften insbesondere zur Verklebung optischer Bauteile wie Glas, optisch transparenter Folien oder dgl. Die Haftklebemasse erzielt insbesondere eine Lichttransmission nach ASTM D 1003 von mindestens 86% und einen Haze-Wert nach ASTM D 1003 von maximal 5%. Zudem zeichnet sich eine derartige Haftklebemasse durch eine hohe UV-Stabilität aus sowie verhält sich inert bei der Verklebung auf elektrisch leitfähigen Substraten.

Wie beschrieben werden als Klebemasse solche auf Basis von Ethylenvinylacetat-Copolymeren (EVA-Copolymeren) eingesetzt. Der Ethylenvinylacetatanteil an der Klebemasse beträgt mindestens 30 Gew.%, vorzugsweise mindestens 40 Gew.-%. Maximal ist ein Anteil von Ethylenvinylacetat von 70 Gew.-%, vorzugsweise von maximal 60 Gew.-% vorgesehen. Dabei kann die Haftklebemasse nicht nur eine spezielles EVA-Copolymer enthalten, vielmehr können auch Gemische aus zwei oder mehreren EVA-Copolymeren verwendet werden. Die Ethylenvinylacetat-Copolymere können gegebenenfalls auch noch bis zu 5 Gew.-% andere Comonomere enthalten, d.h. die Ethylenvinylacetat-Copolymere haben in dieser Ausgestaltung einen maximalen Anteil von 65 Gew.-%. So sind z.B. auch Acrylatmonomere als Comonomere möglich.

Kommerzielle Beispiele für EVA-Copolymere sind z.B. von der Firma Lanxess unter dem Handelsnamen Levapren™ erhältlich sowie von der Firma ExxonMobil Chemical und dem Handelsnamen Esocrene™.

Als Klebrigmachendes Harze werden partiell- oder vollständig hydrierte Harze auf Basis von Kolophonium und Kolophoniumderivaten eingesetzt. Besonders bevorzugt werden Pentaerithrit Varianten der Kolophoniumharze eingesetzt. Der Erweichungsbereich beträgt bevorzugt zwischen 80°C und 120°C. Solche Harze sind z.B. von der Firma Arakawa Chemical Industries unter dem Handelsnamen Pinecrystal™ erhältlich. Der Anteil des Harzes oder Mischungen der zuvor genannten Harztypen beträgt - bezogen auf das EVA-Copolymer - zwischen 20 Gew.-% und 40 Gew.-%.

Als weitere Additive können typischerweise genutzt werden:
- primäre Antioxidanzien, wie zum Beispiel sterisch gehinderte Phenole
- sekundäre Antioxidanzien, wie zum Beispiel Phosphite oder Thioether
- Prozessstabilisatoren, wie zum Beispiel C-Radikalfänger
- Lichtschutzmittel, wie zum Beispiel UV-Absorber oder sterisch gehinderte Amine
- Verarbeitungshilfsmittel
- Füllstoffe, wie zum Beispiel Siliziumdioxid, Glas (gemahlen oder in Form von Kugeln), Aluminiumoxide oder Zinkoxide, wobei die Füllstoffe vorzugsweise so klein gemahlen sind, dass Sie optisch nicht sichtbar sind

Wie bereits zuvor erläutert wurde, bestehen an optische Klebemassen besondere Anforderungen im Hinblick auf deren Lichtstabilität. Um diesen Anforderungen gerecht zu werden, werden der (Haft-)Klebemasse insbesondere Lichtschutzmittel zugegeben. Die Zugabe von Lichtschutzmitteln erfolgt insbesondere zu einem Anteil von 0,1 Gew.-% bis 2 Gew-%.

Als Lichtschutzmittel werden bevorzugt substituierte Triazine gewählt. Die Triazine werden dermaßen gewählt, dass sie eine gute Verträglichkeit mit den EVA-Copolymeren aufweisen. Dies wird z.B. durch Substituenten erreicht. So weisen bevorzugte Ausführungsformen der Triazine mindestens einen aromatischen Substituenten, weiter bevorzugt zwei oder mehr aromatische Substituenten und äußerst bevorzugt genau drei aromatische Substituenten auf. Diese Aromaten können selbst wiederum auch substituiert sein mit mindestes einem aliphatischen Substituenten. In der einfachsten Form kann dies eine Methylgruppe sein. Es sind aber auch andere Substituenten möglich, wie Hydroxygruppen, Ethergruppen, aliphatische Ketten mit 2 bis 20 C-Atomen, die linear, verzweigt oder zyklisch vorliegen und auch wiederum 1 bis 5 Sauerstoffatome in Form von Ethergruppen, Hydroxygruppen, Estergruppen, Carbonatgruppen enthalten können. Beispiele kommerzieller Natur für Lichtschutzmittel sind von der Firma Ciba unter dem Markennamen Tinuvin® erhältlich. So sind z.B. Tinuvin® 400, Tinuvin® 405, Tinuvin® 479 und Tinuvin® 477 geeignete Triazine, die eingesetzt werden können.

Als Lichtschutzmittel können alternativ oder ergänzend zu den Triazinen auch gehinderte Amine eingesetzt werden. Besonders bevorzugt werden substituierte N-Methylpiperidin-Derivate eingesetzt. Diese sind z.B. in Position 1 und in Position 5 sterisch gehindert durch aliphatische Gruppen, wie z.B. Methylgruppen. Besonders bevorzugt werden vier Methylgruppen zur sterischen Hinderung eingesetzt. Um eine gute Löslichkeit mit den Ethylvinylacetatcopolymeren zu erreichen sowie um die Verdampfungstemperatur zu erhöhen, werden lange aliphatische Substituenten eingesetzt, durch die die Löslichkeit verbessert wird. Die Substituenten können linear, zyklisch oder verzweigt sein, bis zu 20 C-Atome enthalten und/oder bis zu 8 O-Atome enthalten, die sich z.B. in Form von Estergruppen, Ethergruppen, Carbonatgruppen oder Hydroxygruppen darstellen. Für die Wirkung können Verbindungen mit nur einer N-Methylpiperidingruppe eingesetzt werden. Es sind aber auch dimere N-Methylpiperidin-Derivate bekannt, die eine Lichtschutzfunktion haben. Diese können auch mit den monomeren Verbindungen kombiniert werden.

Als Alterungsschutzmittel werden bevorzugt sterisch gehinderte Phenole eingesetzt. Sterisch gehinderte Phenole weisen in einer bevorzugten Ausführungsform in beiden ortho Stellungen zur Hydroxygruppe tert.-Butylgruppen auf. Damit eine gute Löslichkeit und eine hohe Verdampfungstemperatur erreicht werden können, sollten die sterisch gehinderten Phenole noch zusätzlich substituiert sein. Die Substituenten können linear, zyklisch oder verzweigt sein, bis zu 20 C-Atome enthalten und/oder bis zu 8 O-Atome enthalten, die sich z.B. in Form von Estergruppen, Ethergruppen, Carbonatgruppen oder Hydroxygruppen darstellen. Kommerziell erhältliche Verbindungen sind z.B. Irganox® 1135 oder Irganox® 1330 von der Firma Ciba.

Als besonders vorteilhaft hat sich die Kombination aus substituierten Phenolen und aromatisch substituierten Phosphiten herausgestellt. Die substituierten Phenolen sollten bevorzugt zumindest zweifach substituiert sein und in beiden Substituenten zumindest ein Schwefelatom enthalten. Kommerzielle Beispiele für S-haltige sterisch gehinderte Phenole sind Irganox® 1520 oder Irganox® 1726 der Firma Ciba. Kommerzielle Beispiele für aromatisch substituierte Phosphite sind Irgafos® 168, Irgafos® 126, Irgafos® 38, Irgafos® P-EPQ oder Irgafos® 12 der Firma Ciba.

Weitere Einzelheiten, Ziele, Merkmale und Vorteile der vorliegenden Erfindung werden nachfolgend anhand bevorzugter Ausführungsbeispiele näher erläutert. In der Zeichnung zeigt
- Fig. 1: ein einseitiges Haftklebeband,
- Fig. 2: ein beidseitiges Haftklebeband,
- Fig. 3: ein trägerfreies Haftklebeband (transfer tape),
- Fig. 4: die Verklebung einer Rückseitenverstärkungsplatte eines Touch Panels,
- Fig. 5: die Verklebung verschiedener Schichten eines Touch Panels.

### Produktaufbau

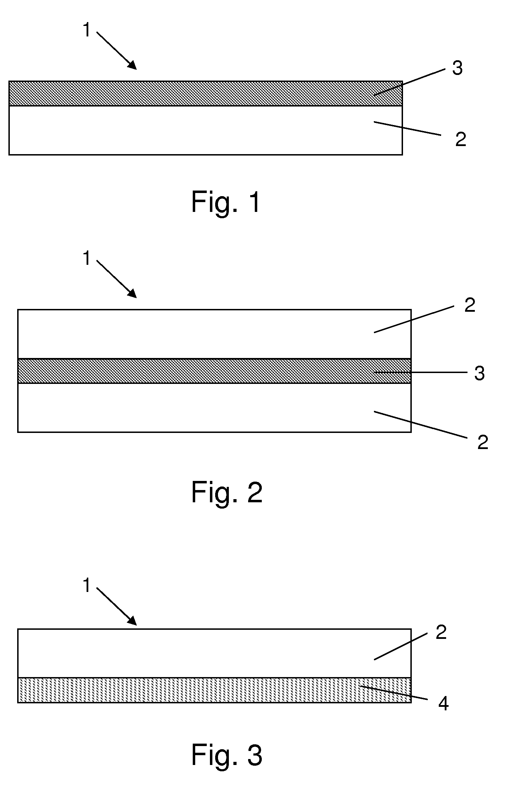

Fig. 1 zeigt ein einseitig klebendes Haftklebeband 1 zur Verwendung bei der Verklebung von optischen Bauteilen, insbesondere von optischen Folien. Das Haftklebeband 1 weist eine Klebeschicht 2 auf, die durch Beschichtung einer Haftklebemasse auf einen Träger 3 hergestellt wurde. Der Haftklebemassenauftrag beträgt bevorzugt zwischen 5 und 250 g/m². Bei der Haftklebemasse handelt es sich um eine solche, aufweisend ein Gemisch aus Ethylenvinylacetat-Copolymer und einem Harz auf Kolophonium-Basis, wie sie zuvor beschrieben wurde. Die Haftklebemasse weist insbesondere im sichtbaren Bereich des Lichtes einen Transmissionsgrad von mindestens 86 % auf, wodurch sie für die optische Anwendung besonders geeignet ist.

Für die Anwendung bei der Verklebung von optischen Bauteilen kommt auch als Träger 2 ein transparenter Träger 2 zum Einsatz. Der Träger 2 ist also ebenfalls im Bereich des sichtbaren Lichtes transparent, weist bevorzugt also einen Transmissionsgrad von ebenfalls mindestens 86 % auf.

Zusätzlich (nicht gezeigt) kann noch eine Trennfolie vorgesehen sein, die die Klebeschicht 2 vor der Verwendung des Haftklebebandes 1 abdeckt und schützt. Die Trennfolie wird dann vor der Verwendung von der Klebeschicht 2 entfernt.

Die transparente Haftklebemasse kann bevorzugt mit einer Trennfolie geschützt werden. Des Weiteren ist es möglich, dass die Trägerfolie mit einer oder mehreren Beschichtungen versehen ist. Der Haftklebemassenauftrag beträgt bevorzugt zwischen 5 und 250 g/m².

Der in Fig. 2 dargestellte Produktaufbau zeigt ein Haftklebeband 1 mit einem transparenten Träger 3, der beidseitig mit einer Haftklebemasse beschichtet ist und somit zwei Klebeschichten 2 aufweist. Der Haftklebemassenauftrag je Seite beträgt wiederum bevorzugt zwischen 5 und 250 g/m².

Auch bei dieser Ausgestaltung wird bevorzugt zumindest eine Klebeschicht 2 mit einer Trennfolie abgedeckt. Bei einem aufgerollten Klebeband kann diese eine Trennfolie ggf. auch die zweite Klebeschicht 2 abdecken. Es können aber auch mehrere Trennfolien vorgesehen sein.

Des Weiteren ist es möglich, dass die Trägerfolie mit einer oder mehreren Beschichtungen versehen ist. Weiterhin kann auch nur eine Seite des Haftklebebandes mit der erfinderischen Haftklebemasse ausgestattet sein und auf der anderen Seite eine andere transparente Haftklebemasse eingesetzt werden.

Der in Fig. 3 dargestellte Produktaufbau zeigt ein Haftklebeband 1 in Form eines transfer tapes, d.h. ein trägerfreies Haftklebeband 1. Hierzu wird die Haftklebemasse einseitig auf eine Trennfolie 4 beschichtet und bildet so eine Haftklebeschicht 2 aus. Der Haftklebemassenauftrag beträgt bevorzugt zwischen 5 und 250 g/m². Ggf. wird diese Haftklebeschicht 2 noch auf ihrer zweiten Seite mit einer weiteren Trennfolie abgedeckt. Zur Verwendung des Haftklebebandes werden dann die Trennfolien entfernt.

Als Alternative zu Trennfolien können beispielsweise auch Trennpapiere oder dgl. eingesetzt werden. In diesem Fall sollte die Oberflächenrauhigkeit des Trennpapiers aber reduziert sein, um eine möglichst glatte Haftklebemassenseite zu realisieren.

### Trägerfolien

Als Trägerfolien können eine Vielzahl von hochtransparenten Polymerfolien eingesetzt werden. Insbesondere spezielle hochtransparente PET Folien können eingesetzt werden. So eignen sich z.B. Folien der Firma Mitsubishi mit dem Handelsnamen Hostaphan™ oder der Firma Toray mit dem Handelsnamen Lumirror™. Der Haze-Wert, ein Maß für die Eintrübung einer Substanz, sollte in einer bevorzugten Auslegung einen Wert von kleiner 5 % nach ASTM D 1003 aufweisen. Ein hoher Haze-Wert bedeutet eine geringe Sichtbarkeit durch die entsprechende Substanz hindurch. Die Lichttransmission liegt bevorzugt bei 550 nm bei größer 86 %, besonders bevorzugt bei größer 88 %. Eine weitere sehr bevorzugte Spezies der Polyester stellen die Polybutylenterephthalat Folien dar.

Neben Polyesterfolien lassen sich auch hochtransparente PVC-Folien einsetzen. Diese Folien können Weichmacher enthalten, um die Flexibilität zu erhöhen. Weiterhin können PC, PMMA und PS Folien eingesetzt werden. Neben reinem Polystyrol lassen sich zur Verringerung der Kristallisationsneigung neben Styrol auch andere Comonomere, wie z.B. Butadien, einsetzen.

Weiterhin können Polyethersulfon- und Polysulfon-Filme als Trägermaterialien eingesetzt werden. Diese sind z.B. von der Firma BASF unter dem Tradenamen Ultrason™ E und Ultrason™ S zu beziehen. Ferner können auch besonders bevorzugt hochtransparente TPU-Folien eingesetzt werden. Diese sind z.B. kommerziell erhältlich von der Firma Elastogran GmbH. Es können auch hochtransparente Polyamid- und Copolyamid-Folien verwendet werden sowie Folien auf Basis von Polyvinylalkohol und Polyvinylbutyral. Neben einschichtigen Folien können auch mehrschichtige Folien verwendet werden, die z.B. coextrudiert hergestellt werden. Hierfür können die zuvor genannten Polymermaterialien miteinander kombiniert werden.

Ferner können die Folien behandelt sein. So können z.B. Bedampfungen vorgenommen sein, beispielsweise mit Zinkoxid, oder es können Lacke oder Haftvermittler aufgetragen sein. Eine weitere mögliche Additivierung stellen UV-Schutzmittel dar, die als Additive in der Folie vorliegen können oder als Schutzschicht aufgebracht sein können.

Die Foliendicke beträgt in einer bevorzugten Auslegung der Erfindung zwischen 4 und 150 µm, besonders bevorzugt zwischen 12 und 100 µm.

Die Trägerfolie kann beispielsweise auch eine optische Beschichtung aufweisen. Als optische Beschichtung eignen sich insbesondere Beschichtungen, die die Reflektion verringern. Dies wird beispielsweise durch eine Absenkung der Brechungsindexdifferenz für den Übergang Luft / optische Beschichtung erreicht.

Generell kann zwischen Single- und Multi-Layer Beschichtungen unterschieden werden. Im einfachsten Fall wird MgF₂ als Single-Layer zur Minimierung der Reflektion eingesetzt. MgF₂ weist einen Brechungsindex von 1.35 bei 550 nm auf. Weiterhin lassen sich z.B. Metalloxid Schichten in verschiedenen Schichten zur Minimierung der Reflektion einsetzen. Typische Beispiele sind Schichten aus SiO₂ und TiO₂. Weitere geeignete Oxide sind z.B. Hafniumoxid (HfO₂), Magnesiumoxid (MgO), Siliziummonoxid (SiO), Zirkonoxid (ZrO₂) und Tantaloxid (Ta₂O₅). Weiterhin können Nitride eingesetzt werden, wie z.B. SiN_{X}. Des Weiteren kann fluoriertes Polymer als Schicht mit geringem Brechungsindex eingesetzt werden. Diese werden auch sehr häufig in Kombination mit den zuvor genannten Schichten aus SiO₂ und TiO₂ eingesetzt. Ferner können Sol-Gel-Prozesse eingesetzt werden. Hier werden z.B. Silikone, Alkoxide und/oder Metallalkoxide als Mischungen eingesetzt und es wird mit diesen Mischungen beschichtet. Siloxane sind somit auch eine weit verbreite Basis für reflektionsmindernde Schichten.

Die typischen Beschichtungsdicken liegen zwischen 2 Å und 1000 Å, bevorzugt zwischen 100 Å und 500 Å. Zum Teil treten - je nach Schichtdicke und chemischer Zusammensetzung der einzelnen oder der mehreren optischen Schichten - Farbveränderungen auf, die wiederum durch die Dicke der Beschichtung gesteuert bzw. verändert werden können. Für den aus Lösung beschichteten Siloxan-Prozess, können auch Schichtdicken von größer 1000 Å erzielt werden.

Eine weitere Möglichkeit zu Verringerung der Reflektion besteht in der Erzeugung von bestimmten Oberflächenstrukturen. So besteht die Möglichkeit der porösen Beschichtung und der Erzeugung von stochastischen oder periodischen Oberflächenstrukturen. Dabei sollte der Abstand zwischen den Strukturen deutlich keiner sein als der Wellenlängenbereich des sichtbaren Lichtes.

Neben dem bereits erwähnten Prozess der Lösungsmittelbeschichtung können die optischen Schichten beispielsweise durch Vakuum-Beschichtungsverfahren, wie z.B. CVD (Chemical Vapor Deposition) oder PIAD (Plasma-Ion assisted Deposition), aufgetragen werden.

### Trennfolie

Zum Schutz der offenen (Haft-)Klebemasse wird diese bevorzugt mit einer oder mehreren Trennfolien abgedeckt. Neben den Trennfolien können - auch wenn nicht sehr bevorzugt - Trennpapiere eingesetzt werden, wie z.B. Glassine-, HDPE- oder LDPE-Trennpapiere, die in einer Auslegung eine Silikonisierung als Trennlage aufweisen.

Bevorzugt wird jedoch eine Trennfolie eingesetzt. Die Trennfolie besitzt in einer sehr bevorzugten Auslegung eine Silikonisierung als Trennmittel. Des Weiteren sollte der Folientrennliner eine extrem glatte Oberfläche besitzen, so dass keine Strukturierung der Haftklebemasse durch den Trennliner vorgenommen wird. Dies wird bevorzugt erreicht, durch die Verwendung von antiblockmittelfreien PET-Folien in Kombination von Silikonsystemen, die aus Lösung beschichtet wurden.

### Beschichtung

Die Haftklebemasse kann aus Lösung oder aus der Schmelze beschichtet werden. Für die Beschichtung aus Lösung wird die Haftklebemasse in gängigen Lösungsmitteln, wie z.B. Toluol, Benzin, Isopropanol, etc. gelöst und dann über eine Beschichtungsdüse oder ein Rakel beschichtet. Besonders bevorzugt ist die Fertigung der Haftklebemasse aus der Lösung, um eine zu frühe Vernetzung zu verhindern. Es können aber auch alle anderen Beschichtungsverfahren eingesetzt werden, die lösungsmittelhaltige Beschichtungen zulassen.

Des Weiteren kann auch aus der Schmelze beschichtet werden. Hier wird z.B. die Haftklebemasse in einem Kneter oder Doppelschneckenextruder abgemischt, mit allen Komponenten vermischt und anschließend z.B. mit einer Extrusionsdüse oder einer Schmelzdüse beschichtet. Zum Erreichen einer möglichst hohen optischen Transparenz wird bevorzugt unter Reinraum-Bedingungen beschichtet.

### Verwendung

Die zuvor beschriebenen (Haft-)Klebemassen und (Haft)-Klebebänder eignen sich insbesondere zur Verwendung in optischen Anwendungen, wobei bevorzugt permanente Verklebungen mit Verweilzeiten von größer einem Monat vorgenommen werden.

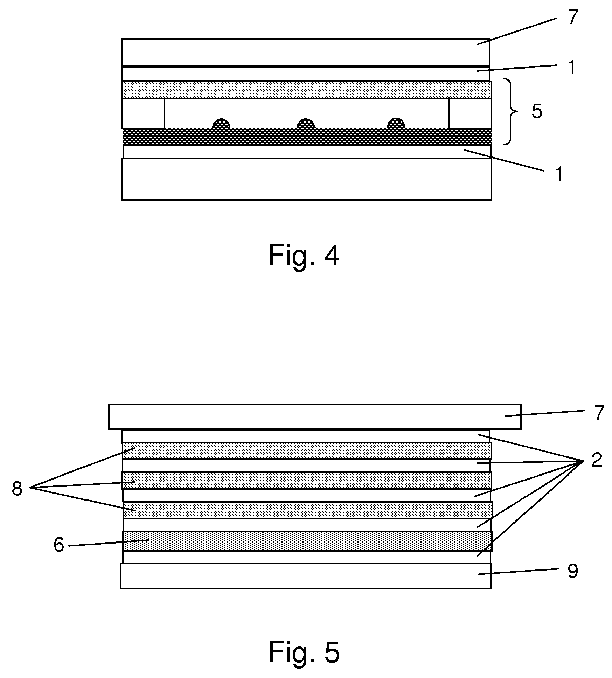

Ein besonders bevorzugtes Einsatzgebiet umfasst die Verklebung von Touch Panels sowie die Herstellung von Touch Panels. In Fig. 4 sind typische Verklebungen in resistiven Touch Panels dargestellt. Hierfür werden bevorzugt Transfer-(Haft)-Klebebänder, also solche ohne Träger, eingesetzt. Topfilm oder Versteifungsplatte können aber auch in Form eines einseitigen (Haft-)Klebebandes mit dem entsprechenden Träger eingesetzt und verklebt werden.

Fig. 4 zeigt ein Touch Panel 5, das mittels eines ersten Haftklebebandes 1 auf einem Substrat 6, beispielsweise einer Plastikplatte oder einer Glasplatte verklebt ist. Auf das Touch Panel 5 ist dann mittels eines zweiten Haftklebebandes 1 ein Topfilm 7 aufgebracht, der üblicherweise eine Antikratzschicht aufweist.

In Fig. 5 sind typische Verklebungen für kapazitive Touch Panels dargestellt. Insbesondere für die Verklebung strukturierter ITO-Filme 8 werden Haftklebeschichten 2 mit Klebemassenaufträgen größer 50 g/m² eingesetzt, damit eine gute Benetzung der Strukturierung erreicht wird.

In Fig. 5 ist ferner die Verklebung eines Schutzfilmes oder eines Mobilfunktelefonfensters 7, eines Substrats 6 als Rückseitenverstärkungsplattes eines kapazitiven Touch Panels sowie eines Displays 9 mit der beschriebenen Haftklebemasse gezeigt. Dabei können sowohl die Haftklebemasse an sich als auch diese in Form eines transfer-Klebebandes, als einseitiges oder auch als doppelseitiges Haftklebeband mit Trägerfolie eingesetzt werden.

### Prüfmethoden

### A. Klebkraft

Die Prüfung der Schälfestigkeit (Klebkraft) erfolgte gemäß PSTC-101. Das Klebeband wird auf eine Glasplatte aufgebracht. Ein 2 cm breiter Streifen des Klebebandes wird durch dreimaliges doppeltes Überrollen mittels einer 2 kg Rolle verklebt. Die Platte wird eingespannt und der Selbstklebestreifen über sein freies Ende an einer Zugprüfmaschine unter einem Schälwinkel von 180° mit einer Geschwindigkeit von 300 mm/min abgezogen. Die Kraft wird in N/cm angegeben.

### B. Transmission

Die Bestimmung der Transmission bei 550 nm erfolgt nach ASTM D1003. Vermessen wurde der Verbund aus optisch transparenter Haftklebemasse und Glasplatte.

### C. Haze

Die Bestimmung des Haze erfolgt nach ASTM D1003.

### D. Lichtbeständigkeit

D Der Verbund aus Haftklebemasse und Glasplatte wird in der Größe 4 x 20 cm² für 250 h mit Osram Ultra Vitalux 300 W Lampen in einem Abstand von 50 cm bestrahlt. Nach der Bestrahlung wird nach Prüfmethode C die Transmission bestimmt.

### E. Wechselklimatest

Die Haftklebemasse wird als einseitiges Haftklebeband (50 g/m² Masseauftrag, 50 µm PET Folie vom Typ Mitsubishi RNK 50) luftblasenfrei auf eine Glasplatte verklebt. Der Prüfstreifen besitzt die Dimension 2 cm Breite und 10 cm Länge. Es wird nach Prüfmethode A die Klebkraft auf Glas bestimmt.

Parallel wird ein derartiger Klebeverbund in einem Wechselklimaschrank platziert und für 1000 Zyklen gelagert. Ein Zyklus umfasst:
- die Lagerung bei -40°C für 30 Minuten
- Hochheizen innerhalb von 5 Minuten auf 85°C
- Die Lagerung bei 85°C für 30 Minuten
- Das Abkühlen auf -40°C innerhalb von 5 Minuten
Nach Klimawechseltest wird wiederum die Klebkraft nach Prüfmethode A bestimmt.

### Beispiele

Die Beschichtungen erfolgten in den Beispielen auf einer üblichen Laborbeschichtungsanlage für kontinuierliche Beschichtungen. Die Beschichtung wurde in einem Reinraum ISO 5 nach Norm ISO 14644-1 vorgenommen. Die Bahnbreite betrug 50 cm. Die Beschichtungsspaltbreite war zwischen 0 und 1 cm variabel einstellbar. Die Länge des Wärmekanals betrug ca. 12 m. Die Temperatur im Wärmekanal war in vier Zonen einteilbar und jeweils zwischen Raumtemperatur und 120°C frei wählbar.

### Herstellung der Muster:

Die Bestandteile werden in Toluol gelöst, so dass ein Feststoffgehalt von 30% entsteht. Die Mischung wird durch Rühren homogen verteilt. Die Muster werden dann auf einer 23 µm dicken PET-Folie so ausgestrichen und bei 110°C getrocknet, dass ein Flächengewicht von 50g/cm Klebmasse verbleibt.

Die genaue Zusammensetzung der Beispiele ergibt sich aus der nachfolgenden Zusammenstellung (Angaben sofern nicht anders angegeben in Gewichtsanteilen).

### Beispiel 1:

Eine Mischung aus 100 g Levapren™ 450, 30 g Arkon™ P100, 0,3 g Tinuvin™ 292, 0,3 g Tinuvin™ 400 gelöst in Toluol (Feststoffgehalt 30 Gew.-%) wurde ausgestrichen.

### Beispiel 2:

Eine Mischung aus 100 g Levapren™ 450, 25 g Arkon™ P100, 0,3 g Tinuvin™ 292, 0,3 g Tinuvin™ 400 gelöst in Toluol (Feststoffgehalt 30 Gew.-%) wurde ausgestrichen.

### Beispiel 3:

Eine Mischung aus 100 g Escorene™ Ultra EVA UL 05540EH2, 30 g Arkon™ P100, 0,3 g Tinuvin™ 292, 0,3 g Tinuvin™ 400 gelöst in Toluol (Feststoffgehalt 30 Gew.-%) wurde ausgestrichen.

### Beispiel 4:

Eine Mischung aus 100 g Escorene™ Ultra EVA 04533EH2, 30 g Arkon™ P100, 0,3 g Tinuvin™ 292, 0,3 g Tinuvin™ 400 gelöst in Toluol (Feststoffgehalt 30 Gew.-%) wurde ausgestrichen.

### Beispiel 5:

Eine Mischung aus 100 g Escorene™ Ultra EVA 04533EH2, 20 g Arkon™ P100, 0,3 g Tinuvin™ 292, 0,3 g Tinuvin™ 400 gelöst in Toluol (Feststoffgehalt 30 Gew.-%) wurde ausgestrichen.

Weitere Angaben zu und Eigenschaften der eingesetzten Rohstoffe:
- Levapren™ 450: Ethylenvinylacetat-Copolymer (EVA) mit einem Vinylacetat-Anteil von 45 Gew.-% Firma Lanxess
- Escorene™ Ultra EVA 4533EHH2: Ethylenvinylacetat Copolymer (EVA) mit einem Vinylacetat-Anteil von 33,0 Gew.-%, Firma Exxon Mobil Chemicals
- Escorene™ Ultra EVA UL 05540EH2: Ethylenvinylacetat Copolymer (EVA) mit einem Vinylacetat-Anteil von 39,0 Gew.-%, Firma Exxon Mobil Chemicals
- Arcron P™ 100: Kolophoniumharz, Pentaerithritester, Erweichungsbereich 100°C, Firma Arakawa Chemicals
- Tinuvin 292™: sterisch gehindertes Amin, Lichtschutzmittel, Firma Ciba
- Tinuvin 400™: Triazin-Derivat, UV-Schutzmittel, Firma Ciba

### Ergebnisse

Zur Bestimmung der klebtechnischen Eigenschaften wurden von allen Beispielen Referenzbeispielen die Sofortklebkräfte auf Glas bestimmt. Hierbei wurde im 180° Winkel gemessen. In der folgenden Tabelle 1 sind die Ergebnisse dargestellt.

| Tabelle 1 | |
|---|---|
| Beispiel | Klebkraft (Test A) |
| 1 | 5,2 N/cm |
| 2 | 4,9 N/cm |
| 3 | 4,4 N/cm |
| 4 | 4,6 N/cm |
| 5 | 3,9 N/cm |

Tabelle 1 kann entnommen werden, dass alle Beispiele zur permanenten Verklebung geeignet sind und relativ hohe Klebkräfte auf Glas aufweisen, berücksichtigend, dass der Masseauftrag nur 50 g/m² betrug.

Zur weiteren optischen Bestimmung wurden von allen Beispielen Transmissions- und Haze-Messungen durchgeführt. Die Ergebnisse sind in Tabelle 2 aufgelistet.

| Tabelle 2 | | |
|---|---|---|
| Beispiel | Transmission (Test B) | Haze (Test C) |
| 1 | 92% | 0,8 % |
| 2 | 92% | 0,7 % |
| 3 | 92% | 1,2 % |
| 4 | 92% | 1,0 % |
| 5 | 92% | 0,9 % |

Tabelle 2 kann entnommen werden, dass alle Beispiele eine wasserklare Transparenz aufweisen und somit auch eine hohe Transmission. Bei der Messung liegt die Transmission bei ca. 92 %, begrenzt jeweils durch Reflektionsverluste an dem Übergang von Luft zur Klebemasse. Diese Ergebnisse werden noch einmal durch die Messungen der Haze-Werte bestätigt. Auch hier wurden in allen Fällen Haze-Werte unterhalb 2 % gemessen.

Im Folgenden wurden weiterhin verschiedene Alterungsuntersuchungen durchgeführt. Als erstes wurde ein Lichtbeständigkeitstest nach Prüfmethode D durchgeführt. Hier wird überprüft, ob durch lange Sonnenlichtbestrahlung eine Verfärbung oder Vergilbung eintritt. Dies ist besonders wichtig für optische Anwendungen, die einer Dauerbestrahlung, wie z.B. durch ein Display, ausgesetzt sind oder im Außenbereich eingesetzt werden. Die Ergebnisse sind in Tabelle 3 zusammengefasst.

| Tabelle 3 | |
|---|---|
| Beispiel | Transmission nach Lichtbeständigkeitstest (Test D) |
| 1 | 91 % |
| 2 | 91 % |
| 3 | 91 % |
| 4 | 91 % |
| 5 | 91 % |

Tabelle 3 kann entnommen werden, dass alle Beispiele eine stabile Transmission aufweisen und einen nur sehr geringen Abfall in der Transmission zeigen.

Ein weiterer Alterungstest umfasst eine Wechselklimaprüfung. Hier wird die Situation simuliert, dass die Klebemasse einem sehr unterschiedlichen Klima ausgesetzt wird, was wiederum der Fall sein kann für Endanwendungen im Mobilfunktelefonbereich. Der Wechselklimatest wurde nach Prüfmethode E durchgeführt. Die Ergebnisse sind in Tabelle 4 dargestellt.

| Tabelle 4 | |
|---|---|
| Beispiel | Klebkraft nach Wechselklimalagerung (Test E) |
| 1 | 4,9 N/cm |
| 2 | 4,7 N/cm |
| 3 | 4,4 N/cm |
| 4 | 4,2 N/cm |
| 5 | 3,6 N/cm |

Die Messungen aus Tabelle 4 verdeutlichen, dass die Klebkräfte nach Wechselklimatest konstant bleiben oder nur sehr leicht abfallen. Die Haftklebemassen haben somit die Temperaturbelastung im Klimawechseltest unverändert überstanden und sind somit u.a. geeignet für die Verwendung im Consumgüterelektronikbereich.

## Patentansprüche

1. Haftklebemasse aufweisend ein Gemisch mindestens enthaltend ein Ethylenvinylacetat-Copolymer mit einem Vinylacetatanteil von 30 bis 70 Gew.-% und
ein Harz auf Kolophonium-Pentaerithrit-Basis mit einem Erweichungsbereich von 80°C bis 120°C,
wobei der Harzanteil zwischen 20 und 40 Gew.-% bezogen auf das Ethylenvinylacetat-Copolymer beträgt,
**dadurch gekennzeichnet, dass**
die Haftklebemasse eine Lichttransmission nach ASTM D 1003 von mindestens 86% aufweist und
wobei die Haftklebemasse einen Haze-Wert nach ASTM D 1003 von maximal 5% aufweist, und
der Ethylenvinylacetatanteil an der Haftklebemasse, bezogen auf das Ethylenvinylacetat-Copolymer mit einem Vinylacetatanteil von 30 bis 70 Gew.-%, mindestens 30 Gew.-% beträgt.

2. Haftklebemasse nach Anspruch 1, **dadurch gekennzeichnet,**
**dass** der Ethylenvinylacetatanteil an der Haftklebemasse mindestens 40 Gew.-% beträgt und/oder maximal 70 Gew.-%, vorzugsweise maximal 60 Gew.-% beträgt.

3. Haftklebemasse nach Anspruch 1 oder 2, **dadurch gekennzeichnet,**
**dass** als Ethylenvinylacetat-Copolymer Gemische aus unterschiedlichen Ethylenvinylacetat-Copolymeren enthalten sind.

4. Haftklebemasse nach einem der vorhergehenden Ansprüche, **dadurch gekennzeichnet,**
**dass** zusätzlich zu den Ethylenvinylacetat-Copolymeren weitere Comonomore, insbesondere Acrylatmonomere, enthalten sind, vorzugsweise mit einem Anteil von maximal 5 Gew.-% bezogen auf Ethylenvinylacetat-Copolymere.

5. Haftklebemasse nach einem der vorhergehenden Ansprüche, **dadurch gekennzeichnet,**
**dass** die Harze partiell oder vollständig hydriert sind.

6. Haftklebemasse nach einem der vorhergehenden Ansprüche, **dadurch gekennzeichnet,**
**dass** selbige eine Klebkraft von mindestens 3,5 N/cm, vorzugsweise von mindestens 4,5 N/cm aufweist.

7. Haftklebemasse nach einem der vorhergehenden Ansprüche, **dadurch gekennzeichnet,**
**dass** selbige eine Lichttransmission nach ASTM D 1003 von mindestens 90% aufweist, vorzugsweise auch nach dem Wechselklimatest E.

8. Haftklebeband mit einer Klebeschicht und einem Träger, **dadurch gekennzeichnet, dass** die Klebeschicht eine Haftklebemasse gemäß einem der vorhergehenden Ansprüche aufweist.

9. Haftklebeband nach Anspruch 8, **dadurch gekennzeichnet,**
**dass** der Träger als Trennfolie ausgebildet ist.

10. Haftklebeband nach Anspruch 8 oder 9, **dadurch gekennzeichnet,**
**dass** der Haftklebemassenauftrag mindestens 5 g/m² und/oder maximal 250 g/m² beträgt.

11. Verwendung einer Haftklebemasse gemäß einem der Ansprüche 1 bis 10 zur Verklebung optischer Bauteile, insbesondere von optischen Folien.

12. Verwendung nach Anspruch 11, **dadurch gekennzeichnet,**
**dass** das optische Bauteil elektrisch leitfähig ist.

## Claims

1. Pressure-sensitive adhesive featuring a mixture at least comprising
an ethylene-vinyl acetate copolymer having a vinyl acetate fraction of 30% to 70% by weight and
a rosin-pentaerythritol-based resin having a softening range of 80°C to 120°C,
the resin fraction being between 20% and 40% by weight, based on the ethylene-vinyl acetate copolymer,
**characterized in that**
the pressure-sensitive adhesive has a light transmittance to ASTM D 1003 of at least 86%, and wherein the pressure-sensitive adhesive has a haze value to ASTM D 1003 of not more than 5%, and
the ethylene-vinyl acetate fraction in the pressure-sensitive adhesive, based on the ethylene-vinyl acetate copolymer having a vinyl acetate fraction of 30% to 70% by weight, is at least 30% by weight.

2. Pressure-sensitive adhesive according to Claim 1, **characterized in that** the ethylene-vinyl acetate fraction in the pressure-sensitive adhesive is at least 40%, by weight and/or is not more than 70%, preferably not more than 60%, by weight.

3. Pressure-sensitive adhesive according to Claim 1 or 2, **characterized in that** said ethylene-vinyl acetate copolymer comprises mixtures of different ethylene-vinyl acetate copolymers.

4. Pressure-sensitive adhesive according to any of the preceding claims, **characterized in that**, in addition to the ethylene-vinyl acetate copolymers, there are further comonomers present, more particularly acrylate monomers, preferably with a fraction of not more than 5% by weight, based on ethylene-vinyl acetate copolymers.

5. Pressure-sensitive adhesive according to any of the preceding claims, **characterized in that** the resins are partially or fully hydrogenated.

6. Pressure-sensitive adhesive according to any of the preceding claims, **characterized in that** it has a bond strength of at least 3.5 N/cm, preferably of at least 4.5 N/cm.

7. Pressure-sensitive adhesive according to any of the preceding claims, **characterized in that** it has a light transmittance to ASTM D 1003 of at least 90%, preferably even after climatic cycling test E.

8. Pressure-sensitive adhesive tape having an adhesive layer and a carrier, **characterized in that** the adhesive layer comprises a pressure-sensitive adhesive according to any of the preceding claims.

9. Pressure-sensitive adhesive tape according to Claim 8, **characterized in that** the carrier is in the form of a release film.

10. Pressure-sensitive adhesive tape according to Claim 8 or 9, **characterized in that** the coat weight of the pressure-sensitive adhesive is at least 5 g/m² and/or not more than 250 g/m².

11. Use of a pressure-sensitive adhesive according to any of Claims 1 to 10 for adhesively bonding optical components, more particularly optical films.

12. Use according to Claim 11, **characterized in that** the optical component is electrically conductive.

## Revendications

1. Masse autoadhésive présentant un mélange contenant au moins
un copolymère d'éthylène-acétate de vinyle présentant une proportion d'acétate de vinyle de 30 à 70% en poids et
une résine à base de colophonium-pentaérythritol présentant une plage de ramollissement de 80°C à 120°C, la proportion de résine étant située entre 20 et 40% en poids par rapport au copolymère d'éthylène-acétate de vinyle, **caractérisée en ce que** la masse autoadhésive présente une transmission de la lumière selon la norme ASTM D 1003 d'au moins 86% et
la masse autoadhésive présentant une valeur de voile selon la norme ASTM D 1003 d'au maximum 5% et
la proportion d'éthylène-acétate de vinyle par rapport à la masse autoadhésive, par rapport au copolymère d'éthylène-acétate de vinyle présentant une proportion d'acétate de vinyle de 30 à 70% en poids, étant d'au moins 30% en poids.

2. Masse autoadhésive selon la revendication 1, **caractérisée en ce que** la proportion d'éthylène-acétate de vinyle par rapport à la masse autoadhésive est d'au moins 40% en poids et/ou d'au maximum 70% en poids, de préférence d'au maximum 60% en poids.

3. Masse autoadhésive selon la revendication 1 ou 2, **caractérisée en ce que** des mélanges de différents copolymères d'éthylène-acétate de vinyle sont contenus comme copolymère d'éthylène-acétate de vinyle.

4. Masse autoadhésive selon l'une quelconque des revendications précédentes, **caractérisée en ce que** d'autres comonomères, en particulier des monomères d'acrylate, sont contenus en plus des copolymères d'éthylène-acétate de vinyle, de préférence à une proportion d'au moins 5% en poids par rapport aux copolymères d'éthylène-acétate de vinyle.

5. Masse autoadhésive selon l'une quelconque des revendications précédentes, **caractérisée en ce que** les résines sont partiellement ou complètement hydrogénées.

6. Masse autoadhésive selon l'une quelconque des revendications précédentes, **caractérisée en ce qu'**elle présente une adhésivité d'au moins 3,5 N/cm, de préférence d'au moins 4,5 N/cm.

7. Masse autoadhésive selon l'une quelconque des revendications précédentes, **caractérisée en ce qu'**elle présente une transmission de la lumière selon la norme ASTM D 1003 d'au moins 90%, de préférence également après le test de changement de climat E.

8. Ruban autoadhésif présentant une couche adhésive et un support, **caractérisé en ce que** la couche adhésive présente une masse autoadhésive selon l'une quelconque des revendications précédentes.

9. Ruban autoadhésif selon la revendication 8, **caractérisé en ce que** le support est réalisé sous forme de feuille de séparation.

10. Ruban autoadhésif selon la revendication 8 ou 9, **caractérisé en ce que** la masse autoadhésive appliquée est d'au moins 5 g/m² et/ou d'au maximum 250 g/m².

11. Utilisation d'une masse autoadhésive selon l'une quelconque des revendications 1 à 10 pour le collage de pièces optiques, en particulier de feuilles optiques.

12. Utilisation selon la revendication 11, **caractérisée en ce que** la pièce optique est électriquement conductrice.
